# EUROPÄISCHE PATENTANMELDUNG

(11) **EP 0 740 984 A1**
(43) Veröffentlichungstag der Anmeldung: **06.11.1996**
(21) Anmeldenummer: 96105611.6
(22) Anmeldetag: 10.04.1996
(51) Int. Cl.: B26D 1/43, B32B 31/00, B26D 1/02

(54) **Trennvorrichtung für Bogenkaschiermaschinen**

(30) Priorität: 03.05.1995 DE 19515735
(71) Anmelder: Billhöfer Maschinenfabrik GmbH, D-90449 Nürnberg (DE)
(72) Erfinder: Hoch, Karl, 90542 Eckental-Eckenhaid (DE); Müller, Hans.-Josef, 92224 Amberg (DE)
(74) Vertreter: Matschkur, Götz, Lindner Patent- und Rechtsanwälte

(57) **Zusammenfassung**

Trennvorrichtung für Bogenkaschiermaschinen zum Separieren der bei einer schuppenförmigen Bogenförderung wenigstens einseitig mit einer durchgehenden Filmschicht überzogenen Bogen unter Auftrennung der freiliegenden Filmschicht im Randbereich des Überlappungsabschnitts durch im wesentlichen auf dem Umfang eines Zylinders angeordnete, um die Zylinderachse rotierende Messer, wobei die Messer vorzugsweise federnd elastisch verbiegbar einends an einem Drehkopf, dessen Drehachse zur seitlichen Bogenkante geneigt verläuft, frei vorstehend befestigt sind, so daß jedes Messer bei der Rotation durch die Bogenebene bewegt wird und seitlich daneben zrückdreht, und daß die Antriebsvorrichtung für den Drehkopf mit einer vorzugsweise einstellbaren Rutschkupplung versehen ist, die beim Andrücken eines Messers an einem Bogen mit einer vorgegebenen Andruckkraft auslöst.

## Beschreibung

Die Erfindung bezieht sich auf eine Trennvorrichtung für Bogenkaschiermaschinen zum Separieren der bei einer schuppenförmigen Bogenförderung mit einer durchgehenden Filmschicht überzogenen Bogen unter Auftrennung der freiliegenden Filmschicht im Randbereich des Überlappungsabschnittes durch im wesentlichen auf dem Umfang eines Zylinders angeordnete um die Zylinderachse rotierende Messer.

Bei Bogenkaschiermaschinen mit der bekannten schuppenförmigen Bogenförderung ergibt sich die Notwendigkeit, die als Überzug aufgebrachte durchgehende Filmschicht wenigstens teilweise im Überlappungsbereich der Bögen durchzutrennen, bevor die Bögen vereinzelt werden, um sicherzustellen, daß die Filmschicht während des mechanischen Vereinzelungsprozesses entlang der gewünschten Rißlinie abreißt und die aufgebrachte Filmschicht keinen Schaden nimmt. Um dies zu bewerkstelligen, sind bereits verschiedene Trennvorrichtungen bekannt geworden, die sich unterschiedlicher Techniken bedienen, wie zum Beispiel die in der deutschen Patentanmeldung P 40 27 431.4-26 oder dem Gebrauchsmuster G 88 05 650.3 beschriebenen Anlagen.

Die bei der Patentanmeldung P 40 27 431.4-26 beschriebene Technik bedient sich zweier sich gegenüberstehend angeordneter, sich nicht berührender Walzen, zwischen denen die filmbeschichteten Bögen laufen. Die untere der beiden Walzen dient als Gegendruckwalze, die obere ist, je nach Ausführungsart, mit Messern oder einer Vielzahl von Spitzen ausgestattet.

Werden mehrere, hintereinander angeordnete Perforiermesser verwendet, ergibt sich neben der Tatsache, daß die Oberfläche der Filmschicht zwecks des Antriebs der Aufreißwalze ständig mit derselben in Kontakt steht, noch das Problem der Koordinierung der Umlaufgeschwindigkeit der Walze mit der Fördergeschwindigkeit der Bögen, die sehr exakt sein muß, um zu gewährleisten, daß die Messer genau an dem Überlappungsbereich in die Filmschicht eintauchen. Eine Anpassung an unterschiedliche Bogengrößen ist somit sehr aufwendig.

Die in dem Gebrauchsmuster G 88 05 650.3 beschriebene Anlage weist auf einem Träger verschiebbar montierte, mittels pneumatisch gesteuerter und über eine Steuereinheit angesprochene Zylinder bewegte Messer zum Durchtrennen der Filmschicht auf. Mit dieser Anordnung können sowohl parallel laufende als auch hintereinander fortlaufende Filmschichten angeschnitten werden. Die Steuerung der Zylinder ist jedoch sehr kompliziert und aufwendig. Gleiches gilt für die von Hand auf dem Träger zu verschiebenden Schneideinheiten.

Die deutsche Patentanmeldung P 42 32 332.0 beschreibt zwar bereits eine gegenüber dem vorbekannten Gebrauchsmuster einfacher aufgebaute und zu steuernde Trennvorrichtung mit einem ebenfalls translatorischen bewegbaren, in diesem Fall an einer schwenkbar gelagerten und durch einen Schrittmotor bewegten Schwinge befestigbaren Messer. Beide Anordnungen mit translatorisch bewegten Messern haben jedoch den entscheidenden Nachteil, daß eine Steuerung erforderlich ist, die den Überlappungsbereich erfaßt, um die Messerbewegung so zu steuern, daß sie beim Passieren eines solchen Überlappungsabschnittes eine Schneidbewegung auslöst.

Schließlich ist in der DE 43 36 835 C1 auch bereits eine Trennvorrichtung vorgeschlagen worden, bei der auf einem Drehteller Klappmesser mit einer im wesentlichen radialen Schneide schwenkbar gelagert sind, die durch eine Kurvensteuerung nach dem Überlaufen der Bogenbahnkante aus einer angehobenen Stellung in eine auf der Bogenbahn gleitende Arbeitsstellung absenkbar sind. Dabei muß die Umfangsgeschwindigkeit des in die Filmschicht einschneidenden Messerabschnitts erheblich größer sein als die Fördergeschwindigkeit der Bogenbahn, um sicherzustellen, daß auf jeden Fall wenigstens ein Messer beim Passieren einer Überlappungskante auch tatsächlich den Überlappungsbereich erfassen kann.

Neben den bereits angesprochenen Schwierigkeiten der verschiedenen vorbekannten Lösungen haben alle gemeinsam den Nachteil, daß sie nicht zur Auftrennung der Filmschichten bei doppelt beschichteten Bogen geeignet sind, sondern es hierfür erforderlich ist, eine Trennvorrichtung für die Folie auf der Oberseite und eine Trennvorrichtung für die Folie auf der Unterseite vorzusehen, was nicht nur den doppelten Aufwand bedeutet, sondern aus Baugründen häufig überhaupt nicht sinnvoll realisierbar ist.

Der Erfindung liegt daher die Aufgabe zugrunde, eine Trennvorrichtung für Bogenkaschiermaschinen zu schaffen, die bei einfachem Aufbau in einem Arbeitsgang beide Filmschichten bei doppelt kaschierten Bögen auftrennen kann.

Zur Lösung dieser Aufgabe ist erfindungsgemäß vorgesehen, daß die Messer vorzugsweise federnd elastisch verbiegbar einends an einem Drehkopf, dessen Drehachse zur seitlichen Bogenkante geneigt verläuft, frei vorstehend befestigt sind, so daß jedes Messer bei der Rotation durch die Bogenebene bewegt wird und seitlich daneben zurückdreht und daß die Antriebsvorrichtung für den Drehkopf mit einer vorzugsweise einstellbaren Rutschkupplung versehen ist, die beim Andrücken des Messers an die Bogen mit einer vorgegebenen Andruckkraft auslöst.

Durch die erfindungsgemäße Anordnung wird ohne besondere Steuerungsvorrichtung zum Ansteuern des Überlappungsbereichs ein sicheres Auftrennen der Folie im Überlappungsbereich erzielt. Nach einem erfolgten Auftrennen wird die Rutschkupplung wieder eingekuppelt und der Drehkopf weitergedreht, so daß das nächstfolgende Messer auf der Bogenbahn aufsetzt und dann wiederum durch Ansprechen der Rutschkupplung das Weiterdrehen unterbrochen wird, bis das auf der Bogenbahn mit leichtem Druck gleitende Messer nach Passieren des nächsten Überlappungsbereichs zweier Bogen und der dabei erfolgenden Auftrennung der Filmschicht wiederum frei wird, usw. Ersichtlich bedarf es bei einer Mehrzahl von Messern an dem rotierenden Drehkopf nur einer relativ geringen Umfangsgeschwindigkeit um selbst bei hohen Fördergeschwindigkeiten der überschuppten Bogen sicherzustellen, daß zwischen dem Passieren zweier aufeinanderfolgender Überlappungsbereiche erneut ein Trennmesser in die Aufsetzposition verbracht worden ist, um das Auftrennen der Folie bewerkstelligen zu können.

Wesentlich ist dabei, daß die Drehachse des Drehkopfes zur seitlichen Bogenkante geneigt verläuft, derart, daß ein dem gerade auf dem Bogen aufsetzenden Messer um 180° versetzt gegenüberliegendes Messer seitlich neben der Kante der geförderten Bogen mit seiner Spitze frei an den Bogen vorbeilaufen kann. Je nach der gewünschten Einschnittiefe der Messer ergeben sich dabei unterschiedliche mögliche Anstellwinkel.

Die Einschnittiefe läßt sich dabei besonders einfach dadurch regeln, daß der Drehkopf parallel zur Drehachse gegenüber der Bogenbahn verschiebbar gelagert ist. Darüber hinaus ist es zweckmäßig, den Drehkopf auch senkrecht zur Bogenbahn verstellbar zu lagern, wodurch der Winkel, mit dem das Messer durch die Bahnebene hindurchbewegt wird, unterschiedlich eingestellt werden kann.

Zur Einstellung des Messerwinkels sollen die Messer, vorzugsweise durch eine gemeinsame Verstelleinrichtung, um ihre Längsachse drehbar am Drehkopf gehaltert sind. Die gemeinsame Verstelleinrichtung mit Hilfe deren das Verdrehen der Messer erfolgt, dient dabei nicht nur der Erleichterung dieser Verdrehung, sondern sichert auch gleichzeitig, daß alle Messer den gleichen Messerwinkel erhalten.

Da eine Veränderung der Richtung der Bogenförderung bei Bogenkaschiermaschinen nicht möglich ist, soll zur Einstellung der Neigung der Drehachse des Drehkopfs zur seitlichen Bogenbahnkante vorgesehen sein, daß die Drehachse des Drehkopfes um eine zur Bogenebene senkrechte Achse gegenüber der Bogenförderrichtung drehverstellbar ist. Bei jeder Veränderung der Eintauchtiefe der Messer des Messerkopfes in die Bogenbahn kann durch Verdrehen um diese Achse sichergestellt werden, daß die Messer nur in der Laufrichtung einmal auf den Bogen aufsetzen, jedoch bei der Rückkehrbewegung seitlich an der Kante der Bogen vorbeilaufen.

Schließlich hat es sich noch als besonders vorteilhaft erwiesen, wenn die Drehachse des Drehkopfes um eine zur Bogenförderrichtung parallele Achse drehverstellbar ist. Durch diese zusätzliche Drehverstellbarkeit ergibt sich eine Einstellung, bei der die Messer beim Aufsetzen auf die Bogenbahn nicht zu dieser parallel liegen, sondern einen gewissen Winkel aufweisen, wodurch sich eine besondere Art der Verspannung des Messers und der Schnittführung bis zum Auslösen der Rutschkupplung ergibt.

Schließlich liegt es auch noch im Rahmen der Erfindung, den Drehkopf über ein Winkelgetriebe mit einer in einer Ebene senkrecht zur Bogenebene liegenden Antriebseinrichtung zu verbinden. Diese Anordnung hat den Vorteil, daß die Trennvorrichtung mit der zugehörigen Antriebsvorrichtung nicht allzuweit seitlich übersteht, sondern durch die Verlagerung in die senkrechte Ebene möglichst platzsparend direkt neben der Bogenförderkante unterbringbar ist.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine teilweise geschnittene Ansicht des erfindungsgemäßen Messerkopfes mit der Antriebseinrichtung,
- Fig. 2: eine Seitenansicht einer erfindungsgemäßen Trennvorrichtung in der eingetauchten Stellung über die Seitenkanten der zu separierenden Bogen,
- Fig. 3: eine Draufsicht längs dem Pfeil III in Fig. 2 und
- Fig. 4: eine schematische Ansicht des Auftrennens beider Filme bei doppeltbeschichteten Bogen durch ein auf der Bogenoberseite aufsetzendes und durch die Bogenebene hindurchbewegtes Messer.

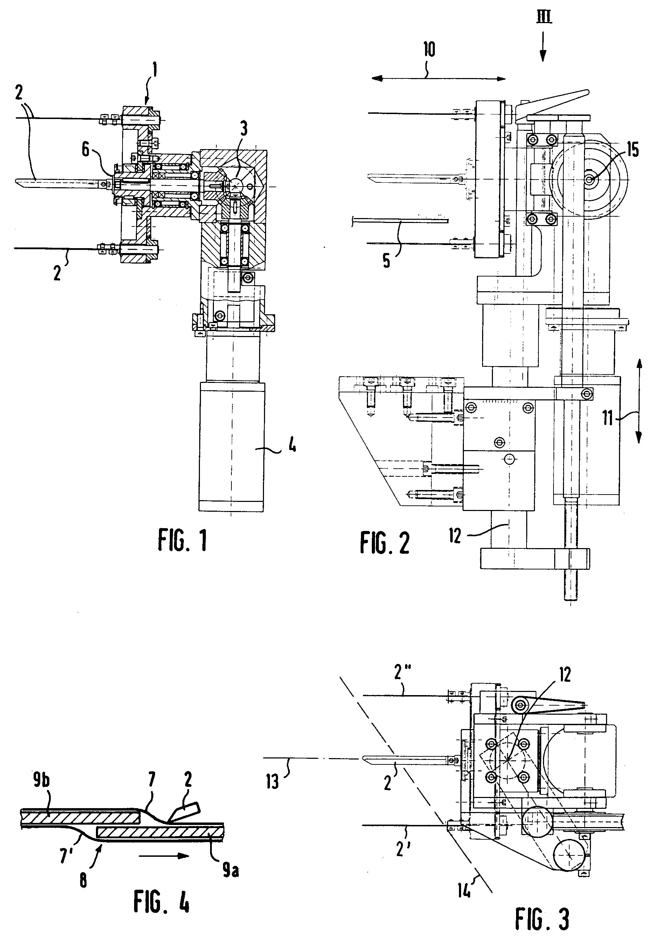

Die erfindungsgemäße Vorrichtung umfaßt einen Drehkopf 1, an dem im dargestellten Ausführungsbeispiel vier um 90° gegeneinander versetzte Messer 2 befestigt sind, wobei die Befestigung bevorzugt so erfolgt, daß die Messer jeweils um ihre Längsachse zur Einstellung des Messerwinkels drehbar sind. Die Verdrehung erfolgt dabei zweckmäßigerweise durch eine gemeinsame im einzelnen nicht näher dargestellte Verstelleinrichtung, um sicherzustellen, daß der Messerwinkel bei allen Messern 2 gleich groß ist. Der Drehkopf 1 wird über ein Winkelgetriebe 3 von einer Antriebsvorrichtung 4 angetrieben, die im wesentlichen in einer seitlichen Ebene senkrecht zur Bogenförderebene angeordnet ist, so daß die Trennvorrichtung nicht allzuweit seitlich über die Bogenkante überzustehen braucht. Diese Lage in der vertikalen Ebene erkennt man besonders deutlich aus Fig. 2, in der bei 5 die Bogenförderebene zu erkennen ist, die senkrecht zur Zeichenebene verläuft.

Der Antrieb des Drehkopfes 1 ist mit einer Rutschkupplung 6 versehen, deren Auslösekraft einstellbar ist, derart, daß beim Aufsetzen eines Messers auf den in der Ebene 5 geförderten überschuppten Bogen bei einer vorgegebenen Anlagekraft die Rutschkupplung auslöst und somit der Drehkopf nicht mehr weiterdreht. Das Messer bleibt in der federnden leicht verbogenen Anlagestellung auf dem unter dem Messer bewegten Bogen liegen, bis eine Überlappungskante zweier Bogen (vgl. Fig. 4) vorbeibewegt wird. Das in der Aufsetzstellung befindliche Messer 2 schneidet dann durch die Kaschierfolie 7 im Überlappungsbereich 8, verläuft zwischen den beiden sich überlappenden Randkanten der Bogen 9a und 9b und tritt auf der Gegenseite wieder aus, so daß es dabei gleichzeitig auch noch eine weitere Kaschierfolie 7' durchschneiden kann, wenn es sich um beidseits kaschierte Bogen handelt. Mit dem Austritt nach dem Durchtrennen der zweiten Kaschierfolie 7' fällt der Druck auf das Messer 2, so daß über die Rutschkupplung der Drehkopf weitergedreht wird und sofort wieder das nächstfolgende Messer in Aufsetzstellung auf die Bogenbahn gebracht wird. Diese Bewegung muß jedenfalls so rasch erfolgen, daß das nächstfolgende Messer eher auf der Bogenbahn aufsetzt als die nächste Überlappungskante vorbeibewegt wird.

Neben der Einstellung der Schnittiefe durch eine Bewegung der Schneidvorrichtung parallel zur Drehachse des Drehkopfes in Richtung des Doppelpfeils 10 in Fig. 2, kann die gesamte Anordnung auch in Richtung des Doppelpfeils 11 in der Höhe verstellt werden, wodurch unabhängig von einer Verdrehbarkeit der Messer 2 um ihre eigene Achse der Messerwinkel beim Aufsetzen auf die Bogenbahn veränderbar ist.

Eine besonderes wesentliche Verstellmöglichkeit besteht in der Verdrehbarkeit der gesamten Schneidvorrichtung um die Drehachse 12. Durch diese Verdrehung um die Achse 12 wird die Neigung der Drehachse 13 des Drehkopfes zur Längsförderrichtung der Bogen und damit zur Seitenkante 14 der überschuppten Bogen eingestellt, wie dies in Fig. 3 besonders gut zu erkennen ist. Diese Schrägstellung ist deshalb wichtig, damit die Messer, nachdem sie durch die Bogenebene hindurchbewegt worden sind und dabei die Kaschierfolie aufgeschnitten worden ist (vgl. das unten stehende Messer 2' in Fig. 3), bei Weiterdrehen in der gegenüberliegend versetzten Stellung (Messer 2'' in Fig. 3) neben der Kante 14 der überschuppten Bogen verlaufen. Dadurch ergibt sich auch ein bestimmter Einschneidwinkel, d.h., das Messer schneidet nicht auf der gesamten Einschneidtiefe mit seiner Schneidkante gleichzeitig in die Kaschierfolie ein, sondern es taucht im gezeigten Ausführungsbeispiel zunächst die Spitze ein und dann wird der Schnitt bis zur Kante 14 gezogen.

Bei 15 erkennt man eine weitere Drehachse, um die der Drehkopf mit den daran befestigten Messern 2 so verstellt werden kann, daß die Drehachse zur Bogenförderebene geneigt ist.

Die Erfindung ist nicht auf das dargestellte Ausführungsbeispiel beschränkt. Gezeigt wurde eine Ausführungsform, bei der die Messer von oben nach unten durch die Bahnebene geführt werden. Es könnte aber genau so gut vorgesehen sein - und dies ist in manchen Anwendungsfällen sogar zweckmäßiger - daß man die Rotationsrichtung und die Anordnung der Messer so wählt, daß sie sich von unten an die geschuppten Bögen anlegen, die in diesem Fall selbstverständlich durch Rückhalteorgane nach unten gedrückt werden. In diesem Fall schneidet also dann das Messer 2 nicht wie in Fig. 4 dargestellt zunächst die Kaschierfolie 7 und dann die untere Kaschierfolie 7', sondern umgekehrt zunächst durchschneidet sie die Kaschierfolie 7' und anschließend beim Auslaufen nach oben die Kaschierfolie 7. Darüber hinaus wäre es auch nicht unbedingt erforderlich, die Messer federnd verbiegbar auszuführen, obgleich sich bei einer solchen Ausführung größere Variationsmöglichkeiten ergeben. Mit starren Messern müßte man dafür sorgen, daß das Messer parallel zur Bogenebene auf die Bogen aufsetzt. Die Neigbarkeit der Rotationsachse des Drehkopfs zur Bogenebene könnte also bei starren Messern nicht ausgenutzt werden.

## Patentansprüche

1. Trennvorrichtung für Bogenkaschiermaschinen zum Separieren der bei einer schuppenförmigen Bogenförderung wenigstens einseitig mit einer durchgehenden Filmschicht überzogenen Bogen unter Auftrennung der freiliegenden Filmschicht im Randbereich des Überlappungsabschnitts durch im wesentlichen auf dem Umfang eines Zylinders angeordnete, um die Zylinderachse rotierende Messer, dadurch gekennzeichnet, daß die Messer (2) vorzugsweise federnd elastisch verbiegbar einends an einem Drehkopf (1), dessen Drehachse (13) zur seitlichen Bogenkante (14) geneigt verläuft, frei vorstehend befestigt sind, so daß jedes Messer (2) bei der Rotation durch die Bogenebene (5) bewegt wird und seitlich daneben zrückdreht, und daß die Antriebsvorrichtung (3, 4) für den Drehkopf mit einer vorzugsweise einstellbaren Rutschkupplung (6) versehen ist, die beim Andrücken eines Messers (2) an einem Bogen mit einer vorgegebenen Andruckkraft auslöst.

2. Trennvorrichtung nach Anspruch 1, dadurch gekennzeichnet, daß die Messer (2), vorzugsweise durch eine gemeinsame Verstelleinrichtung, um ihre Längsachse drehbar am Drehkopf (1) gehaltert sind.

3. Trennvorrichtung nach Anspruch 1 oder 2, dadurch gekennzeichnet, daß der Drehkopf (1) parallel zur Drehachse (13) gegenüber der Bogenbahn verschiebbar gelagert ist.

4. Trennvorrichtung nach einem der Ansprüche 1 bis 3, dadurch gekennzeichnet, daß der Drehkopf (1) im wesentlichen senkrecht zur Bogenbahn (5) verstellbar gelagert ist.

5. Trennvorrichtung nach einem der Ansprüche 1 bis 4, dadurch gekennzeichnet, daß die Drehachse (13) des Drehkopfes (1) um eine zur Bogenförderrichtung parallele Achse (15) drehverstellbar ist.

6. Trennvorrichtung nach einem der Ansprüche 1 bis 5, dadurch gekennzeichnet, daß die Drehachse (13) des Drehkopfes (1) um eine zur Bogenebene senkrechte Achse (12) gegenüber der Bogenförderrichtung drehverstellbar ist.

7. Trennvorrichtung nach einem der Ansprüche 1 bis 6, dadurch gekennzeichnet, daß der Drehkopf (1) über ein Winkelgetriebe (3) mit einer in einer Ebene senkrecht zur Bogenebene (5) liegenden Antriebseinrichtung (4) verbunden ist.
